# EUROPÄISCHE PATENTANMELDUNG

(11) **EP 1 600 470 A1**
(43) Veröffentlichungstag der Anmeldung: **30.11.2005**
(21) Anmeldenummer: 05405322.8
(22) Anmeldetag: 28.04.2005
(51) Int. Cl.: C08J 9/04, B29C 44/42

(54) **Verfahren zur Herstellung eines geschäumten Polymerkörpers**

(30) Priorität: 28.05.2004 EP 04405329
(71) Anmelder: Sulzer Chemtech AG, 8404 Winterthur (CH)
(72) Erfinder: Wehr, Hendrik Dr., 45549 Sprockhövel (DE); Studlek, Joachim, 35614 Asslar (DE); Habibi-Naini, Sasan Dr., 8486 Rikon (CH)
(74) Vertreter: Sulzer Management AG

(57) **Zusammenfassung**

Das Verfahren zum Herstellen eines geschäumten Polymerkörpers aus einer Formmasse wird mit einem formgebenden Werkzeug (5) durchgeführt, in dem simultan eine Vernetzungsreaktion und eine Bildung von Schaumbläschen erfolgt. Vor einer Verarbeitung der Formmasse liegt diese in Form von zwei getrennt gehaltenen Komponenten (A, B) vor, die jeweils partielle Mittel zur Durchführung der Vernetzungsreaktion enthalten und die sich durch diese partiellen Mittel unterscheiden. Zur Präparierung zwecks Verarbeitung werden die beiden Formmassen-Komponenten gemischt. Die beiden Komponenten (A, B) werden zu Beginn der Präparierung separat in zwei Strömen unter erhöhtem Druck gefördert. Dabei werden beide oder nur eine der Komponenten mit einem physikalischen Treibfluid (C) imprägniert. Die beiden Ströme (32a, 32b) werden weiterhin unter erhöhtem Druck nach dem Imprägnieren zusammengeführt und dabei vermischt. Schliesslich wird das beim Mischen gebildete reaktive Gemisch unter Absenkung des Drucks kontinuierlich extrudiert oder dosiert in eine Kavität des formgebenden Werkzeugs eingespritzt. Die Kavität ist gegebenenfalls zur Beschleunigung der Vernetzungsreaktion beheizt.

## Beschreibung

Die Erfindung betrifft ein Verfahren zur Herstellung eines geschäumten Polymerkörpers gemäss Oberbegriff von Anspruch 1 sowie eine Anlage zum Durchführen des Verfahrens. Die Herstellung des geschäumten Polymerkörpers kann dosiert mittels Spritzgiessen oder kontinuierlich durch Extrudieren erfolgen.

In der DE-A- 198 53 021 sind Spritzgiessverfahren und entsprechende Vorrichtungen beschrieben, mit welchen geschäumte Polymerformteile herstellbar sind. Offenbart wird eine Vorrichtung, die eine konventionelle Spritzgiessmaschine umfasst und mit der ein physikalisches Treibmittel (z.B. Stickstoff, Kohlendioxid, Wasser) unter Verwendung eines Gasdosiersystems in eine Polymerschmelze eingebracht werden kann. Das Treibmittel wird gemäss einer beschriebenen Ausführungsform an den Oberflächen einer Ringspaltströmung mit dem Schmelzestrom in Kontakt gebracht, so dass eine Imprägnierung des Polymers mit dem Treibmittel durch Diffusion erfolgt. Der Ringspalt ist durch zwei Hohlzylinder aus Sintermetall gebildet, durch deren Wände eine homogene Eingasung des Treibmittels über eine grosse Grenzfläche ermöglicht wird.

Statt einer Polymerschmelze kann auch eine Formmasse verwendet werden, die durch Mischen zweier Komponenten in einen verarbeitbaren Zustand gebracht worden ist, in welchem Zustand die Formmasse in die Kavität eines formgebenden Werkzeugs dosiert zugeführt und dort simultan mit einer Vernetzungsreaktion geschäumt wird. Die für einen gewünschten Aufschäumgrad erforderliche Menge an ungeschäumter Formmasse wird mittels der Dosierung abgemessen. Vor der Verarbeitung liegt die Formmasse in Form von zwei getrennt gehaltenen Komponenten vor, die jeweils partielle Mittel zur Durchführung der Vernetzungsreaktion enthalten und die sich durch diese partiellen Mittel unterscheiden. Zur Präparierung zwecks Verarbeitung werden die beiden Formmassen-Komponenten gemischt. Beispiele für solche zweikomponentige Formmassen sind Flüssigsilikonkautschuke LSR und reaktive Gemische bei der Herstellung von Polyurethan PUR.

LSR ist eine pastöse Masse, die mittels spezieller Pump- und Dosiertechnik auf einer Spritzgiessmaschine zu Formteilen verarbeitet werden kann. LSR ist ein bei erhöhter Temperatur (bei rund 150 - 200 °C) vernetzender Silikonkautschuk, nämlich ein sogenannter "Hochtemperatur vernetzender Silikonkautschuk" oder kurz HTV-Silikonkautschuk. Einzeln sind die Formmassen-Komponenten nicht reaktionsfähig. Durch Mischen der Komponenten und Erhöhen der Temperatur entsteht die Formmasse, in der die Vernetzungsreaktion stattfindet. Diese Reaktion erfolgt beispielsweise als eine platinkatalysierte Additionsvernetzung, bei der ein Polysiloxan mit einem Vernetzer (bestehend aus kurzen Polymerketten) und unter dem Einfluss eines Pt-Katalysators reagiert. Der Vernetzer und der Katalysator sind partielle Mittel zur Durchführung der Vernetzungsreaktion, welche die zwei Komponenten eines Vernetzungsmittels bilden.

In der Kautschukverarbeitung werden zum Schäumen chemische Treibmittel verwendet, bei denen durch thermisch initiierten Zerfall Treibgase entstehen. Aus den Treibgasen bilden sich Bläschen in einer vor der Vernetzung (Vulkanisierung) noch fliessfähigen Kautschukmasse aus. Beim Schäumen von LSR lässt sich dieses Verfahren nicht anwenden, da auf dem Temperaturniveau, das für die Treibgasbildung erforderlich ist, die Vernetzungsreaktion im Vergleich zum Zerfall des beim Schäumen von Kautschuk verwendeten Treibmittels zu schnell abläuft, so dass ein simultanes Vernetzen und Schäumen nicht möglich ist.

PUR ist ein Reaktiv-Kunststoff, der durch Vermischen von zwei flüssigen Reaktanden entsteht. Diese Formmassen-Komponenten sind Polyole (chemische Verbindungen mit mehreren Alkoholgruppen) und Polyisocyanate. Bei der Reaktion, bei der eine Vernetzung stattfindet, entsteht durch Polyaddition aus je einer Alkohol- und einer Isocyanatgruppe eine Urethangruppe. Beim PUR sind die beiden Reaktanden die partiellen Mittel der Vernetzungsreaktion. Hinzu kommt noch ein Katalysator, welcher der einen der Formmassen-Komponenten zugemischt ist.

Aufgabe der Erfindung ist es, ein Verfahren zum Herstellen eines geschäumten Polymerkörpers zu schaffen, das sich dazu eignet, beispielsweise LSR oder PUR als eine schäumbare Formmasse zu verwenden, wobei eine Erzeugung von Bläschen weitgehend simultan mit einer Vernetzungsreaktion erfolgen muss. Diese Aufgabe wird durch das im Anspruch 1 definierte Verfahren gelöst.

Das Verfahren zum Herstellen eines geschäumten Polymerkörpers aus einer Formmasse wird mit einem formgebenden Werkzeug durchgeführt, in dem simultan eine Vernetzungsreaktion und eine Bildung von Schaumbläschen erfolgt. Vor einer Verarbeitung der Formmasse liegt diese in Form von zwei getrennt gehaltenen Komponenten vor, die jeweils partielle Mittel zur Durchführung der Vernetzungsreaktion enthalten und die sich durch diese partiellen Mittel unterscheiden. Zur Präparierung zwecks Verarbeitung werden die beiden Formmassen-Komponenten gemischt. Die beiden Komponenten werden zu Beginn der Präparierung separat in zwei Strömen unter erhöhtem Druck gefördert. Dabei werden beide oder nur eine der Komponenten mit einem Treibmittel, insbesondere einem physikalischen Treibfluid imprägniert. Die beiden Ströme werden weiterhin unter erhöhtem Druck nach dem Imprägnieren zusammengeführt und dabei vermischt. Schliesslich wird das beim Mischen gebildete reaktive Gemisch unter Absenkung des Drucks kontinuierlich extrudiert oder dosiert in eine Kavität des formgebenden Werkzeugs eingespritzt. Die Kavität ist gegebenenfalls zur Beschleunigung der Vernetzungsreaktion beheizt.

Es liesse sich beim Verarbeiten von LSR auch das reaktive Gemisch bei Umgebungstemperatur mit dem Treibfluid imprägnieren, denn die Vernetzungsreaktion verläuft bei dieser Temperatur sehr langsam. Von Vorteil ist bei diesem Verfahren, dass der verfahrenstechnische Aufwand gering ist.

Dagegen ist das erfindungsgemässe Verfahren in anderer Hinsicht vorteilhaft, da die getrennten Formmassen-Komponenten nicht reaktionsfähig sind. Tritt beim Imprägnieren ein Störfall ein, so werden die verwendeten Imgrägnierungs-Einrichtungen nicht durch vernetzende Formmassen betriebsunfähig. Die Betriebssicherheit ist daher grösser als beim verfahrenstechnisch einfacheren Verfahren. Ausserdem ist ein Wartungsaufwand kleiner; es entfallen insbesondere beim Unterbrechen des Verfahrens zeit- und materialaufwändige Spülvorgänge.

Die abhängigen Ansprüche 2 bis 5 betreffen vorteilhafte Ausführungsformen des erfindungsgemässen Verfahrens. Anlagen zum Durchführen des erfindungsgemässen Verfahrens sind Gegenstand der Ansprüche 6 bis 10.

Nachfolgend wird die Erfindung anhand der Zeichnungen erläutert. Es zeigen:
- Fig. 1: Blockschema einer Anlage, mit der das erfindungsgemässe Verfahren durchführbar ist,
- Fig. 2: eine Imprägnierungs-Einrichtung, dargestellt als Längsschnitt bzw. Seitenansicht, und
- Fig. 3: einen Querschnitt durch die Einrichtung der Fig. 2.

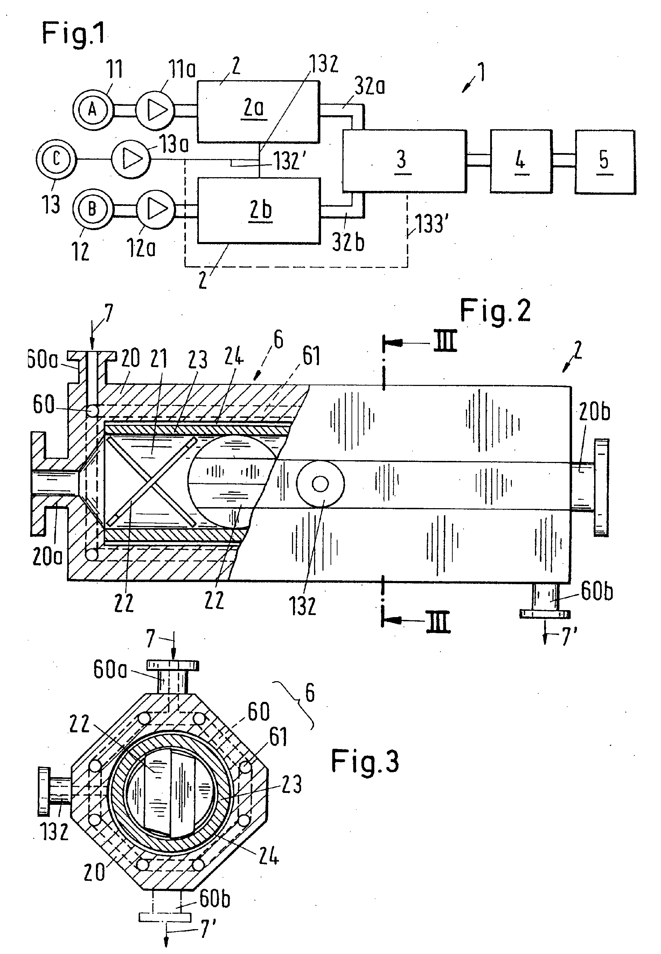

Eine Anlage 1, mit der sich das erfindungsgemässe Verfahren durchführen lässt, ist in Fig. 1 als Blockschema dargestellt. Reservoire 11 und 12 für Formmassen-Komponenten A und B sind über Pumpen 11 a, 11 b mit Imprägnierungs-Einrichtungen 2a bzw. 2b verbunden. (Es kann auch nur eine Imprägnierungs-Einrichtung vorgesehen sein.) Eine Ausführungsform 2 für die Imprägnierungs-Einrichtungen 2a, 2b wird anhand der Figuren 2 und 3 beschrieben. Mittels einer Spritzgiessmaschine, den Einrichtungen 2a, 2b sowie einer Mischeinrichtung 3 lassen sich erfindungsgemäss geschäumte Polymerkörper oder Polymerformteile herstellen. Dabei wird das Schäumen in einem formgebenden Werkzeug 5 simultan mit einer Vernetzungsreaktion durchgeführt. Es ist auch eine Variante des Verfahrens mit einem Extrudierwerkzeug möglich.

Vor einer Verarbeitung der Formmasse liegt diese in Form von den zwei getrennt gehaltenen Komponenten A und B vor. Diese enthalten jeweils partielle Mittel zur Durchführung der Vernetzungsreaktion; sie unterscheiden sich durch diese partiellen Mittel. Zur Präparierung zwecks Verarbeitung werden die beiden Formmassen-Komponenten A und B in der Mischeinrichtung 3 gemischt. Erfindungsgemäss werden die beiden Komponenten A und B (oder auch nur eine der Komponenten A, B) zu Beginn der Präparierung separat in zwei Strömen unter erhöhtem Druck mit einem Treibmittel, insbesondere einem physikalischen Treibfluid C imprägniert, das mit einer Pumpe 13a (oder Kompressor) aus einem Reservoir 13 durch eine Leitung 132' und Eintrittsstutzen 132 in die Imprägnierungs-Einrichtungen 2a, 2b eingespeist wird. Falls eine der Komponenten A und B leichter imprägnierbar ist, kann es vorteilhaft sein, nur diese zu imprägnieren. Bei der nachfolgenden Vereinigung in der Mischeinrichtung 3 verteilt sich dann das Treibfluid C in der gesamten zu schäumenden Formmasse.

Die Ströme der Komponenten A und B werden nach dem Imprägnieren der beiden Komponenten bzw. nur einer der Komponenten durch Leitungen 32a, 32b in die Mischeinrichtung 3 gefördert, wo sie zusammen geführt und weiterhin unter erhöhtem Druck vermischt werden. Schliesslich wird das Gemisch unter Absenkung des Drucks dosiert in eine Kavität des formgebenden Werkzeugs 5 eingespritzt. Bei einer Verarbeitung von LSR wird die Kavität zur Beschleunigung der Vernetzungsreaktion beheizt. An die Mischeinrichtung 3 schliesst eine Verbindungseinrichtung 4 an, die ― nicht dargestellt - eine Dosiervorrichtung und eine Drosseldüse umfasst. Die Drosseldüse mündet in die Kavität des formgebenden Werkzeugs 5. In der Verbindungseinrichtung 4 kann die präparierte Formmasse mittels einer Fördereinrichtung, beispielsweise mit einer Schnecke eines Plastifizieraggregats, zum formgebenden Werkzeug 5 transportiert werden. In einer solchen Fördereinrichtung findet ein Ausgleich der Treibfluidkonzentration statt (in der Regel weitgehehnd aufgrund von Diffusion), der bei ausreichend langer Verweilzeit zu einer Homogenisierung dieser Konzentration und damit zu einer gleichmässigen Aufschäumung führt. Damit keine vorzeitige Vernetzung stattfindet, muss bei der Verarbeitung von LSR die Temperatur niedrig zwischen 20 und 40 °C gehalten werden. Eine thermisch initiierte Vernetzung des Polymers erfolgt erst im formgebenden Werkzeug 5.

Anstelle der Drosseldüse und des formgebenden Werkzeugs 5 für das Spritzgiessen kann auch ein Extrudierwerkzeug als formgebendes Werkzeug vorgesehen sein, mit dem kontinuierlich beispielsweise ein geschäumtes Polymerrohr herstellbar ist.

Als Treibfluid C kann CO₂, N₂, Pentan oder ein anderer geeigneter Kohlenwasserstoff, d.h. ein kostengünstiger und behördlich zugelassener Kohlenwasserstoff, verwendet werden. Es sind auch weitere Gase wie beispielsweise Edelgase und selbstverständlich Gemische von jeweils zwei oder mehr aller genannten Gase verwendbar.

Es ist möglich, die Imprägnierung mit dem Treibfluid C in der Mischeinrichtung 3 fortzusetzen. Eine gestrichtelt gezeichnete Leitung 133' deutet diese Möglichkeit an. Es ist auch möglich, simultan mit dem Imprägnieren in den Einrichtungen 2a und/oder 2b den Formmassen-Komponenten A bzw. B mindestens ein weiteres Additiv, beispielsweise ein Farbstoff oder ein katalytisch wirksamer Stoff, zuzumischen.

Bei einer Verarbeitung von PUR beginnt die Vernetzung des Polymers bereits mit dem Vermischen der Formmassen-Komponenten A und B. Daher muss die Verbindungseinrichtung 4 so ausgebildet sein, dass die Verweilzeit des reaktiven Gemisches möglichst kurz ausfällt. Die Verbindungseinrichtung 4 muss sich im Wesentlichen auf die Dosiervorrichtung und die Drosseldüse beschränken. Das reaktive Gemisch, dessen Komponenten A und B einzeln mit Treibfluid C imprägniert worden sind, wird also unmittelbar nach dessen Präparierung in das formgebende Werkzeug eingespritzt.

Die beiden Imprägnierungs-Einrichtungen 2a, 2b für die Ströme der beiden Formmassen-Komponenten A, B, die in der Anlage 1 parallel geschaltet der Mischeinrichtung 3 vorgeschaltet sind, können gleich ausgebildet sein. Eine derartige Imprägnierungs-Einrichtung 2, die teilweise bereits aus der DE-C-101 50 329 bekannt ist (wobei jedoch mit der beschriebenen Einrichtung nicht das Imprägnieren einzelner Komponenten A bzw. B eines reaktiven Gemisches sondern einer Polymerschmelze vorgesehen ist), zeigt die Fig. 2: im linken Bereich als Längsschnitt und im rechten Bereich als Seitenansicht dargestellt. Eine gleiche Einrichtung 2 - vorteilhafterweise etwas grösser dimensioniert - lässt sich auch für die Mischeinrichtung 3 verwenden. Ein Querschnitt durch die Einrichtung 2 nach der Linie III - III in Fig. 2 ist in Fig. 3 gezeigt.

Die Imprägnierungs-Einrichtung 2 umfasst folgende Komponenten: Ein Gehäuse 20 zu einer zylindrischen Mischkammer 21, innerhalb der statische Mischerelemente 22 angeordnet sind, sowie Anschlussstutzen 20a, 20b für die zu imprägnierende Masse; ausserdem eine rohrförmige Wand 23 (oder Hülse 23) zwischen Gehäuse 20 und Mischkammer 21, die aus einem porösem Werkstoff (beispielsweise gesinterten Metallkörnern) hergestellt ist. Durch die Wand 23 ist das unter Druck einspeisbare Treibfluid C homogen über die Mantelfläche der Mischkammer 21 verteilbar. Das Treibfluid C, das durch den Stutzen 132 eingespeist wird, fliesst durch einen Ringspalt 24 tangential und axial über die äussere Oberfläche der rohrförmigen Wand 23. Im Ringspalt 24 sind abstandhaltende Elemente angeordnet, die nicht dargestellt sind. Statt des einen Eintrittsstutzen 132 kann auch eine Mehrzahl von Stutzen 132 vorgesehen sein, falls eine ungenügende Verteilung des Treibfluids C im Ringspalt 24 dies erforderlich macht. Ausser den Anschlussstutzen 20a, 20b können weitere Stutzen (nicht dargestellt) vorgesehen sein, durch die ein weiteres Additiv in die Mischkammer 21 zuführbar ist.

Im Gehäuse 20 ist ein Kanalsystem 6 für ein Wärmeträgermedium integriert (durch Pfeile 7, 7' angedeutet), insbesondere ein Kanalsystem für ein Kühlmittel, mit dem beim Imprägnieren Wärme aus der durch die Mischerelemente 22 bearbeiteten Formmassen-Komponenten A bzw. B abführbar ist. Bei einem intensiven Mischen, bei dem hohe Scherungen und entsprechend lokale Temperaturerhöhungen aufgrund innerer Reibung auftreten, ist eine Kühlung erforderlich, damit nicht bereits in der Mischeinrichtung 3 eine Vernetzung einsetzt. Das Kanalsystem 6 umfasst axiale, parallel geschaltete Kanäle 61, die über Ringkanäle 60 an den beiden Enden der Imprägnierungs-Einrichtung 2 miteinander verbunden sind. Das Kühlmittel wird durch einen Eingangsstutzen 60a in den dargestellten Ringkanal 60 eingespeist. Ein Ausgangsstutzen 60b, der sich in der Querschnittsdarstellung der Fig. 3 auf der nicht abgebildeten Seite befindet, ist dort strichpunktiert angedeutet. Statt den acht Kanälen 61 reichen beispielsweise auch vier aus, die in Serie geschaltet sein können. Anders als dargestellt muss das Gehäuse 20 aus mehreren Teilen zusammengesetzt sein, damit das Kanalsystem 6 konstruktiv ausführbar ist.

Die Mischerelemente 22 haben mit Vorteil einen bekannten Aufbau aus sich kreuzenden Stegen (die bei Fachleuten bekannte "SMX-Struktur"). Benachbarte Mischerelemente 22 sind jeweils um 90° winkelartig gegeneinander versetzt. Mit diesem Aufbau wird die zu imprägnierende Masse laufend von der Peripherie (Mantelfläche der Mischkammer 21), wo Treibfluid C von der Wand 23 aufgenommen wird, in das Innere der Mischkammer 21 verfrachtet, und umgekehrt Masse, die noch weiter mit Treibfluid C zu beladen ist, aus dem Inneren der Mischkammer 21 zur Peripherie transportiert.

Bei der anhand der Figuren 2 und 3 beschriebenen Ausführungsform des erfindungsgemässen Verfahrens wird das Imprägnieren in einer zylindrischen Mischkammer 21 vorgenommen. Dieser Verfahrensschritt lässt sich auch in einer ringspaltförmigen Mischkammer durchführen, wie sie aus der eingangs genannten DE-A- 198 53 021 bekannt ist. Dabei wird das Treibfluid über die innere und äussere Manteloberfläche der Mischkammer mit der zu imprägnierenden Masse in Kontakt gebracht. Ist der Ringspalt eng, so kann das Einmischen des Treibfluids C ohne statische Mischelemente erfolgen.

## Patentansprüche

1. Verfahren zum Herstellen eines geschäumten Polymerkörpers aus einer Formmasse, die in einem formgebenden Werkzeug (5) simultan mit einer Vernetzungsreaktion geschäumt wird, wobei vor einer Verarbeitung der Formmasse diese in Form von zwei getrennt gehaltenen Komponenten (A, B) vorliegt, die jeweils partielle Mittel zur Durchführung der Vernetzungsreaktion enthalten und die sich durch diese partiellen Mittel unterscheiden, während zur Präparierung zwecks Verarbeitung die beiden Formmassen-Komponenten gemischt werden, **dadurch gekennzeichnet, dass** die beiden Komponenten (A, B) zu Beginn der Präparierung separat in zwei Strömen unter erhöhtem Druck gefördert werden und dabei ein Imprägnieren mit einem Treibmittel (C) bei beiden oder bei nur einer der Komponenten durchgeführt wird, dass nach dem Imprägnieren die beiden Ströme (32a, 32b) weiterhin unter erhöhtem Druck zusammengeführt sowie vermischt werden und dass schliesslich das beim Mischen gebildete reaktive Gemisch unter Absenkung des Drucks kontinuierlich extrudiert wird oder dosiert in eine Kavität des formgebenden Werkzeugs eingespritzt wird, wobei die Kavität gegebenenfalls zur Beschleunigung der Vernetzungsreaktion beheizt ist.

2. Verfahren nach Anspruch 1, **dadurch gekennzeichnet, dass** als Treibmittel (C) ein physikalisches Treibfluid verwendet wird, beispielsweise CO₂, N₂, Pentan, ein anderer geeigneter Kohlenwasserstoff, ein Edelgas oder ein Gemisch von jeweils zwei oder mehr der genannten Gase, und das Imprägnieren sowie das Vermischen der beiden Ströme vorzugsweise unter Verwendung von statischen Mischern (21, 22) durchgeführt wird.

3. Verfahren nach Anspruch 1 oder 2, **dadurch gekennzeichnet, dass** die partiellen Mittel zur Durchführung der Vernetzungsreaktion zwei Komponenten eines Vernetzungsmittels sind, oder dass die partiellen Mittel durch zwei Reaktanden der Vernetzungsreaktion gegeben sind.

4. Verfahren nach einem der Ansprüche 1 bis 3, **dadurch gekennzeichnet, dass** simultan mit dem Imprägnieren den Formmassen-Komponenten (A, B) mindestens ein weiteres Additiv, beispielsweise ein Farbstoff oder ein katalytisch wirksamer Stoff, zugemischt wird.

5. Verfahren nach einem der Ansprüche 1 bis 4, **dadurch gekennzeichnet,**
- **dass** als Formmasse ein bei erhöhter Temperatur vernetzender Flüssigsilikonkautschuk LSR, ein "HTV-Silikonkautschuk", verarbeitet wird, dass beim Mischen der imprägnierten Formmassen-Komponenten (A, B) optional zusätzlich Treibfluid (C) zugeführt werden kann und dass nach dem Mischen die präparierte Formmasse mittels einer Fördereinrichtung, beispielsweise mit einer Schnecke in einem Plastifizieraggregat, zum formgebenden Werkzeug (5) transportiert und in dieses dosiert eingespritzt wird; oder
- **dass** ein reaktives Gemisch zur Herstellung von Polyurethan PUR verarbeitet wird und dass das Gemisch, dessen Komponenten (A, B) einzeln mit Treibfluid (C) imprägniert worden sind, unmittelbar nach der Präparierung in das formgebende Werkzeug (5) dosiert eingespritzt wird.

6. Anlage zum Durchführen des Verfahrens gemäss einem der Ansprüche 1 bis 5, **dadurch gekennzeichnet, dass** mindestens eine Imprägnierungs-Einrichtung (2a, 2b) für einen der Ströme der beiden Formmassen-Komponenten (A, B) einer Mischeinrichtung (3) vorgeschaltet ist, wobei gegebenenfalls zwei Imprägnierungs-Einrichtungen parallel geschaltet sind, und
- dass an die Mischeinrichtung eine Verbindungseinrichtung (4) anschliesst mit Dosiervorrichtung und Drosseldüse, die in die Kavität eines formgebenden Werkzeugs (5) mündet, oder
- dass an die Mischeinrichtung ein Extrudierwerkzeug anschliesst.

7. Anlage nach Anspruch 6, **dadurch gekennzeichnet, dass**
- für einen Transport des reaktiven Gemisches, nämlich der imprägnierten Formmasse, in der Verbindungseinrichtung (4) eine Förderschnecke angeordnet ist, so dass in dieser die Verweilzeit des reaktiven Gemisches bei einer niedrigen Temperatur zwischen 20 und 40 °C relativ lang ist, insbesondere für den Fall einer Verarbeitung von LSR, bei der eine thermisch initiierte Vernetzung des Polymers erst im formgebenden Werkzeug (5) erfolgt, oder
- dass die Verbindungseinrichtung (4) so ausgebildet ist, dass die Verweilzeit des reaktiven Gemisches möglichst kurz ausfällt, insbesondere für den Fall einer Verarbeitung von PUR, bei der eine Vernetzung des Polymers bereits mit dem Vermischen der Formmassen-Komponenten (A, B) beginnt.

8. Anlage nach Anspruch 6 oder 7, **dadurch gekennzeichnet, dass** jede Imgrägnierungs-Einrichtung (2, 2a, 2b) folgende Komponenten umfasst:
ein Gehäuse (20) zu einer zylindrischen oder ringspaltförmigen Mischkammer (21) und eine rohrförmige Wand (23) bzw. zwei solche Wände aus porösem Werkstoff, durch welche ein unter Druck einspeisbares Treibfluid (C) homogen über die Mantelfläche bzw. die innere sowie äussere Manteloberflächen der Mischkammer verteilbar ist.

9. Anlage nach Anspruch 8, **dadurch gekennzeichnet, dass** in der Mischkammer statische Mischerelemente (22) angeordnet sind.

10. Anlage nach Anspruch 9, **dadurch gekennzeichnet, dass** im Gehäuse (20) ein Kanalsystem (6) für ein Wärmeträgermedium (7, 7') integriert ist, mit dem insbesondere beim Imprägnieren aus der durch Scherung in den Mischerelementen (22) beeinflussten Formmassen-Komponenten (A, B) Wärme abführbar ist.
